# EUROPEAN PATENT APPLICATION

(11) **EP 2 045 725 A1**
(43) Date of publication of application: **08.04.2009**
(21) Application number: 07764203.1
(22) Date of filing: 11.07.2007
(51) Int. Cl.: G06F 15/16, G06F 15/173, H04L 12/54

(54) **METHOD AND SYSTEM, CLIENT, SERVER OF MANAGING XML DOCUMENT**

(30) Priority: 24.10.2006 CN 200610063281
(71) Applicant: Huawei Technologies Co., Ltd., Shenzhen, Guangdong Province 518129 (CN)
(72) Inventor: BAO, Hongqing, Shenzhen Guangdong 518129 (CN); SUN, Qian, Shenzhen Guangdong 518129 (CN); ZHAO, Yang, Shenzhen Guangdong 518129 (CN); TIAN, Linyi, Shenzhen Guangdong 518129 (CN); PENG, Chenghui, Shenzhen Guangdong 518129 (CN); SONG, Xuefei, Shenzhen Guangdong 518129 (CN)
(74) Representative: Gulde Hengelhaupt Ziebig & Schneider
(86) International application number: PCT/CN2007/070275
(87) International publication number: WO 2008/049348

(57) **Abstract**

A method of managing the XML document, including the XML server receiving the request of XML document management operation sending from the XDM client, said request carries the document identifier and the state information; the XDM server changes the state of the document corresponding to said document identifier to the state that corresponding to said state information. A system of managing the XML document, XDMC and XDMS are also provided, the XDMC can change the state of XML document via the XDMS, thus the XML document can be managed with flexibility.

## Description

### Field of the Invention

The present invention relates to the Extensible Markup Language (XML) technique, particularly to an XML document management method, an XML document management system, an XML document management client, and an XML document management server.

### Background of the invention

The XML document management (XQuery Data Model) system is a universal enabler for various communication services, and is capable of storing and managing the data of various services. The Open Mobile Alliance (OMA) has established a preliminary specification for the XML document management. The XML document management is implemented via the XML Configuration Access Protocol (XCAP).

The XCAP resource includes an XML document, or an element or an attribute in an XML document. The XCAP resource is identified by an XCAP Uniform Resource Identifier (URI). One XCAP URI corresponds to one XML document, one element in an XML document, or an attribute in an XML document. The common data in an XML document includes the elements and the attributes of the XML document. An XDM client (XDMC) makes use of an XML document in the XML server (XMLS) through XCAP operations, and should construct the URI of a resource on which an operation is requested on the basis of a method of application. At present, the XDMC may perform the following general operations on an XML document in the XMLS: Creation or replacement of a document, deletion of a document, retrieval of a document, creation or replacement of an element, deletion of an element, retrieval of an element, creation or replacement of an attribute, deletion of an attribute, and retrieval of an attribute. For details of the XCAP, a reference may be made to the specification of "The Extensible Markup Language (XML) Configuration Access Protocol" of the Internet Engineering Task Force.

The XDMS provides the functions of operation authentication on an XML document, XML document management, XML document change notification, etc. For example, a shared XDMC stores URI list documents shared by users. A URI list includes a group, an acceptance list, a denial list, etc. as reused by different service enablers.

In the prior art, the XML system only supports general operations on XML documents. Therefore, the XDMC can only perform general operations on the XML documents. However, in actual applications, the XDMC needs to control the XML documents flexibly and comprehensively.

### Summary of the Invention

An embodiment of the present invention provides an XML document management method, which enables the XDMC to manage XML documents flexibly, comprehensively, and effectively.

An embodiment of the present invention provides an XML document management system, which enables the XDMC to manage XML documents flexibly, comprehensively, and effectively.

An embodiment of the present invention provides an XML document management client, which enables the XDMC to manage XML documents flexibly, comprehensively, and effectively.

An embodiment of the present invention provides an XML document management server, which enables the XDMC to manage XML documents flexibly, comprehensively, and effectively.

An XML document management method includes:

receiving, by an XDMS, an XML document management operation request sent from an XDMC, the request carrying a document identifier and state information;

modifying, by the XDMS, the state of the document corresponding to the document identifier to the state corresponding to the state information.

An XML document management system includes: an XDMC and an XDMS;

the XDMC is adapted to send an XML document management operation request to the XDMS, with a document identifier and state information carried in the request;

the XDMS is adapted to modify the state of the document corresponding to the document identifier to the state corresponding to the state information.

An XML document management client includes: a message constructing unit and a message transmitting unit;

the message constructing unit is adapted to construct an XML document management operation request, with a document identifier and state information carried in the request;

the message transmitting unit is adapted to send the XML document management operation request to the XDMS.

An XML document management server includes: a receiving unit and a processing unit;

the receiving unit is adapted to receive an XML document management operation request from an XDMC, the XML document management operation request carrying an document identifier and state information;

the processing unit is adapted to receive the XML document management operation request from the receiving unit, and modify the state of the document corresponding to the document identifier to the state corresponding to the state information.

The embodiments of the present invention have the following advantageous effects:

1) Because the state information of the document is carried in the XML document management request sent to the XDMS by the XDMC, the XDMS can change the state of the document, so that the state of the document is achievable as required by the XDMC.

2) Because the state of the document changes (e.g. the state of the document changes to suspend), the XDMC and the XDMS can not perform general operations on the document. Therefore, the XDMC can control the XML document completely, and manage the XML document more conveniently.

### Brief Description of the Drawings

Figure 1 is a flow diagram of the XML document management method according to an embodiment of the present invention;

Figure 2 is a flow diagram of obtaining the state information of a document according to an embodiment of the present invention; and

Figure 3 is a structural diagram of the XML document management system according to an embodiment of the present invention.

### Detailed Description of the Invention

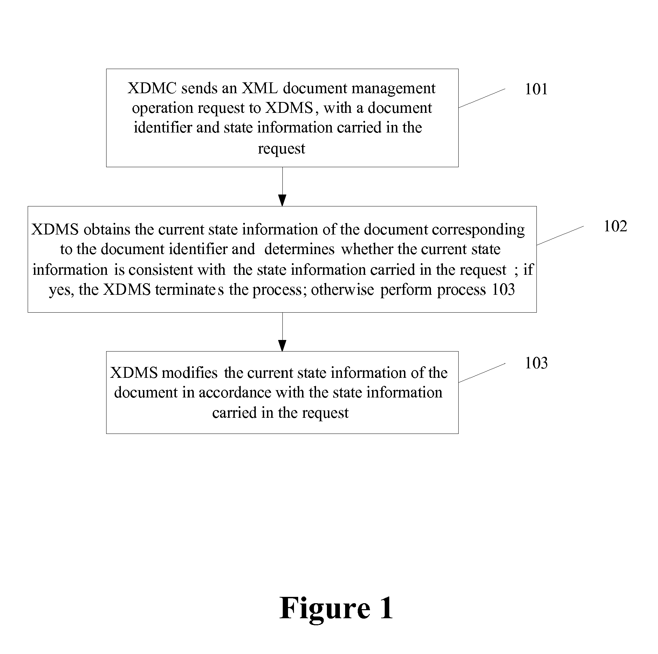

Figure 1 is a flow diagram of the XML document management method according to an embodiment of the present invention. The method includes the following processes:

Process 101. The XDMC sends an XML document management operation request to the XDMS, with a document identifier and state information carried in the request.

Process 102. The XDMS obtains the current state information of the document corresponding to the document identifier, and determines whether the current state information is consistent with the state information carried in the request. If the current state information is consistent with the state information carried in the request, the XDMS terminates the process; otherwise the XDMS performs process 103. This process is optional.

Process 103. The XDMS changes the current state information of the document in accordance with the state information carried in the request.

The state information described in the embodiment of the present invention includes a suspended state, a resume state, and other states set by the XML document management system. The XML document management method according to the embodiment of the present invention is described as follows in the case that the state information is the suspend state and the resume state respectively.

The state information of a document is the attribute information of the document, i.e. additional information of the document, or, in other words, the metadata of the document, which is highly correlated to the document itself (e.g. the creation time of the document). With metadata introduced into a document, the document includes metadata of the document and common data of the document. The metadata of the document is some data describing additional information of the document. A document may contain several types of metadata. For example, the creation time of the document and the owner of the document can be taken as the metadata of the document. The main difference between the metadata and common data of the document lies in that: The metadata of the document describes the attributes of the document, and is usually maintained by the XDMS and can not be changed by the XDMC freely, while the common data of the document may be changed by the XDMC freely.

A usual implementation solution for storing XML documents in the XDMS is: The XML documents are recorded in tables in a database, and each record in a table generally includes the following fields:

User ID (designed to identify the owner of an XML document), document name, creation time, document version tag (E Tag), etc.

For implementing document suspend/resume operation, a field describing the state of the document is added in the record in the embodiment of the present invention. If a suspend operation is performed on the document, the value of the field is set to "inactive", indicating the document is in a suspended state. If a resume operation is performed on the document, the value of the field is set to "active", indicating the document is in an active state. However, to implement document suspend/resume operations via the XCAP protocol, the metadata IDs (also referred to as access IDs) in the document should be determined, so as to access the metadata of the document by means of the metadata IDs, and implement document state control (e.g. suspension or resumption) by modifying the information in the metadata of the document. If an operation is to be performed on the document, the XDMC sends an XCAP message containing the metadata ID (Request-URI) of the document, to specify the XCAP resource to be accessed, i.e. the metadata information of the XML document to be accessed. For example, the value of a Request-URI may be:
http://xcap.example.com/resource-lists/users/sip:joe@example.com/index

Two embodiments of document metadata representation method are described as follows by a way of example.

Example 1

A Request-URI is set in a specified format to specify the location information of the metadata of the XML document to be accessed. The Request-URI includes the following parts:

XCAP Root: It is a context containing all application documents of all users managed by the XCAP server, such as the http://xcap.example.com in the above example.

Document Selector: It includes a series of path segments, each of which is separated with a "/" mark. A Document Selector specifies an XML document in the XCAP root.

Metadata Selector Separator: A "∼∼@" mark is used in the embodiment of the present invention, in order to differentiate from the node selector in the XCAP protocol. Indeed, other appropriate marks may be used.

Metadata Selector: It specifies a specific metadata in a selected document, for example, "state" may be used as the metadata selector for the state of a selected document.

Because of the fact that the metadata information may be in a simple data format or a complex XML format, the Request-URI that is used to access the metadata of an XML document may further include the following additional parts:

At present, the Request-URI parameter that specifies the document state of the metadata of the document titled "index" in the above example is as follows:
http://xcap.example.com/resource-lists/resource-lists/users/sip:joe@example,com/index/∼∼@/state

Example 2

The document state information may be stored in a separate XCAP resource document. The relationship between the XCAP URI of an XML document and the XCAP URI of the state information of the XML document is as follows:

The XCAP URI of document state information includes the corresponding XCAP URI of the XML document suffixed with ".state".

For example, the XCAP URI of an XML document is:
http://xcap.example.com/resource-lists/users/sip:joe@example.com/index

The XCAP URI of the state information of the document is:
http://xcap.example.com/resource-lists/users/sip:joe@example.com/index.state

For implementing a suspension operation on a document, the state information of the document as described in process 101 is "inactive".

In process 103, the XDMS performs the following in accordance with the state information of the document obtained in process 102: If the current state information of the document is "active", the XDMS modifies the state information of the document to "inactive", and returns an operation success message to the XDMC; if the current state information of the document is "inactive", the XDMS keeps the current state information of the document, and returns an operation failure message to the XDMC.

Similarly, for implementing a resumption operation on a document, the state information of the document as described in process 101 is "active".

In process 103, the XDMS performs the following in accordance with the state information of the document obtained in process 102: If the current state information of the document is "active", the XDMS keeps the current state information of the document, and returns an operation invalid message to the XDMC; if the current state information of the document is "inactive", the XDMS modifies the state information of the document to "active", and returns an operation success message to the XDMC.

If an XDMC performs a suspension operation on a document, the XDMC sends an XML document suspension operation request to the XDMS. If the XDMS returns a success response message, it indicates that the document in the XDMS was originally in an "active" state, and is in a "suspend" state presently. If the XDMS returns an error indication message, it indicates that the document in the XDMS was originally in a "suspend" state and is still in a "suspend" state presently. Similarly, if an XDMC performs a resumption operation on a document and the XDMS returns a success response message, it indicates that the XDMS document was originally in a "suspend" state and is in an "active" state presently; otherwise it indicates that the document in the XDMS was originally in an "active" state and is still in an "active" state presently.

In addition to obtaining the current state of a document by means of the type of the message returned in above operations, the current state value of a document may be carried in the message body or a specified header field of the error indication message. A returned message includes several parts, one is message type, and some others are header fields. The message type is a number. Each header field includes two parts of a header field name and a header field value. A number of the message type may be specified to represent the current state of the document. Or, a header field may be used to represent the current state of the document, and different values of the header field can represent different states.

In addition, the XDMC may obtain the state information of the document before initiating a suspension or resumption operation on the document. If the obtained current state information of the document is identical to the state of the document required by the XDMC, the XDMC does not need to initiate any operation on the state information of the document.

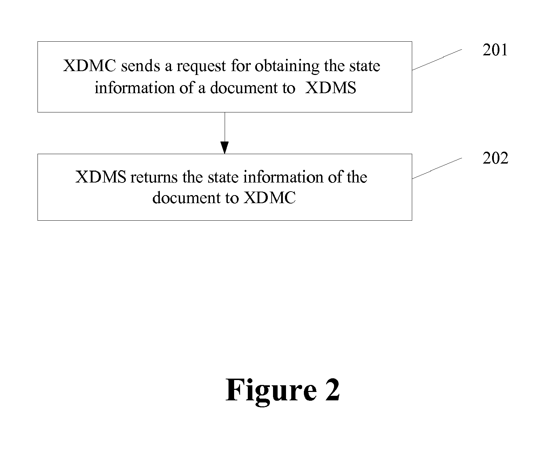

If the metadata containing the state information of a document is stored in a separate XML file, the XDMC obtains the state of the document with the method shown in Figure 2. The detailed process is as follows:

Process 201: The XDMC initiates a request for obtaining the state information of a document to the separate XML document. The request is: The XDMC constructs an access ID of the document that stores the state information of the document in accordance with the access ID of the document of which the state is to be obtained. Specifically, the XDMC attaches a ".state" suffix to the access ID of the document of which the state is to be obtained.

Process 202: The XDMS returns the current state information of the document to the XDMC in accordance with the request message.

Therefore, it can be seen that if the XDMC obtains the current state of the document in advance and the current state of the document is the state required by the XDMC, the XDMC does not have to initiate a suspension or resumption request. Therefore, the process is simpler.

An embodiment of the suspension operation on a document is described as follows:

The XDMC sends a suspension request: The XDMC first sends a suspension request message to the XDMS. The suspension request message is a message in the XCAP protocol. The Request-URI parameter in the message is described as above. The suspension request message is as follows by example of the Request-URI described at the end of the above paragraph:

```
                PUT
             http://xcsp.example.com/resource-lists/resource-lists/users/sip:joe@example.
             com/index/∼∼@/state HTTP/1.1
                User-Agent: Mozilla/4.0 (compatible; MSIE 6.0; Windows NT 5.1;)
                Host: xcap.example.com
   
                Inactive
```

The "Inactive" in the suspension request message is the message body.

If the state information is stored in a separate XML document, the suspension request message is as follows:

```
    PUT
       http://xcap.example.com/resource-lists/users/sip:joe@example.com/index.sta
te HTTP/1.1
          User-Agent: Mozilla/4.0 (compatible; MSIE 6.0; Windows NT 5,1;)
          Host: xcap.example.com
   
          <?xml version="1.0" encoding="UTF-8"?>
          <state>inactive</state>
```

If the separate document further includes contents (e.g. Access information) besides the state information <state>, only the state information is modified with a PUT method as follows:

```
                PUT
             http://xcap.example.com/resource-lists/users/sip:joe@example.com/index.sta
te/∼∼/state HTTP/1.1
                User-Agent: Mozilla/4.0 (compatible; MSIE 6.0; Windows NT 5.1)
                Host: xcap.example.com
   
                inactive
```

2. When checking the Request-URI, the XDMS first finds the XML document corresponding to the parameter first. On finding a metadata selector separator, the XDMS locates the metadata in accordance with the metadata selector and checks the content of the current metadata first (here the metadata is the state information of the document), and then performs as follows in accordance with the state information of the document:

If the state value of the document is "active", the XDMS checks the message body part of the request message. If the content of the message body is "inactive", the XDMS modify the state of the document to "inactive", and returns an operation success indication message as follows:

```
                     HTTP/1.1 200 OK
                     Connection: close
```

If the state value of the document is "inactive" and the requested operation is invalid, the XDMS returns a failure message:

```
                   HTTP/1.1 403 Forbidden
                   Connection: close
```

An embodiment of a resumption operation on a document may be implemented as follows:

1. The XDMC sends a resumption request: The XDMC first sends a resumption message to the XDMS. The message is a message in the XCAP protocol. The Request-URI parameter in the message has been described as above. The resumption request message is as follows by example of the Request-URI described at the end of the above paragraph:

```
                 PUT
              http://xcap.example.com/resource-lists/resource-lists/users/sip:joe@example.
com/index/∼∼@/state HTTP/1.1
                 User-Agent: Mozilla/4.0 (compatible; MSIE 6.0; Windows NT 5.1;)
                 Host: xcap.example.com
```

2. The XDMS processes the resumption request: On receiving the above request, the XDMS first finds the XML document corresponding to the parameter during the checking of the Request-URI; on finding a metadata selector separator, the XDMS locates the metadata in accordance with the metadata selector and first checks the content of the current metadata (here the metadata is the state information of the document). In this case:

If the obtained state of the document is "active", the resumption request is valid, and the XDMS sends an appropriate response message. For example, the XDMS may send an appropriate response message as follows:

```
                  HTTP/1.1403 Forbidden
                  Connection: close
```

If the obtained state of the document is "inactive", the resumption request is valid, the XDMS modifies the state of the document to "active", and returns an operation success indication message:

```
                  HTTP/1.1 200 OK
                  Connection: close.
```

It can be seen from the above technical solution: the state information of a document is carried in the XML document management request sent to the XDMS by the XDMC, so that the XDMS can change the state of the document, thereby the state of the document is achievable as required by the XDMC. In addition, because the state of the document changes (e.g. the state of the document changes to suspend), the XDMC and the XDMS can not perform general operations on the document, thereby the XDMC can control the XML document completely, and manage the XML document more conveniently. Moreover, the XDMC can obtain the current state of the document in advance; if the current state of the document is the state required by the XDMC, the XDMC does not need to initiate a suspension or resumption request, thereby making the process to be simpler.

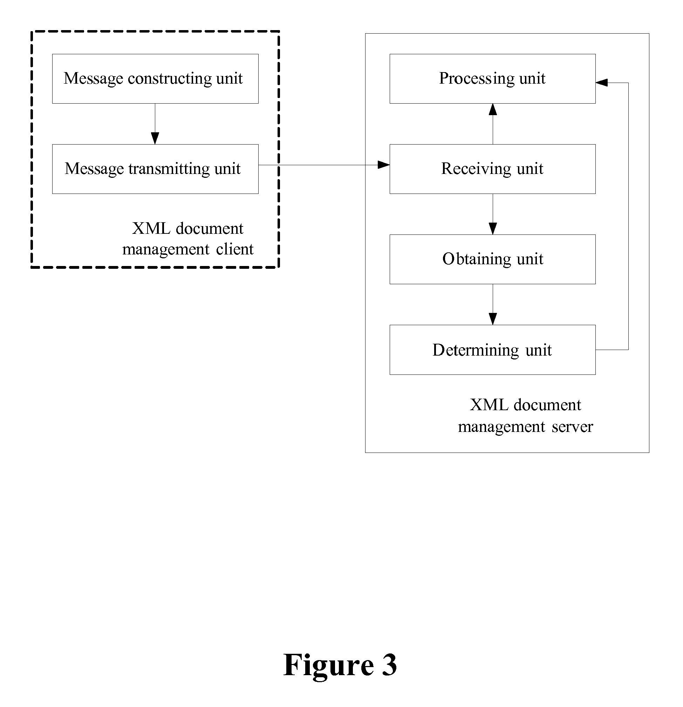

Figure 3 is a structural diagram of the XML document management system according to an embodiment of the present invention.

The XDMC is adapted to send an XML document management operation request to the XDMS, with a document identifier and state information carried in the request. The XDMC includes a message constructing unit and a message transmitting unit. The message constructing unit is adapted to construct an XML document management operation request carrying a document identifier and state information. The message transmitting unit is adapted to send the XML document management operation request to the XDMS.

The XDMS is adapted to modify the state of the document corresponding to the document identifier to the state corresponding to the state information. The XDMS includes a receiving unit, a processing unit, an obtaining unit, and a determining unit. The receiving unit is adapted to receive an XML document management operation request carrying a document identifier and state information from the XDMC; the obtaining unit is adapted to obtain the current state information of the document corresponding to the document identifier, and transmit the current state information to the determining unit. The determining unit is adapted to determine whether the current state information is consistent with the state information in the XML document management operation request, and send an initiation instruction to the processing unit if the current state information is not consistent with the state information in the XML document management operation request. The processing unit is adapted to receive the XML document management operation request from the receiving unit, and modify the state of the document corresponding to the document identifier to the state corresponding to the state information.

In the technical solutions of document management according to embodiments of the present invention, the state information of an XML document is carried in the XML document management request sent to the XDMS by the XDMC, so that the XDMS can change the state of the XML document, thereby the state of the document is achievable as required by the XDMC. Because the state of the XML document changes (e.g. the state of the document changes to suspend), the XDMC and the XDMS can not perform general operations on the XML document, thereby the XDMC can control the XML document flexibly, completely and effectively, and can manage the XML document more conveniently.

It is apparent for those skilled in the art that a variety of modifications and alternations to the present invention can be made without departing from the spirit and scope of the present invention. If the modifications and alternations fall into the scope of the claims or equivalents of the claims, the present invention intends to cover the modifications and alternations.

## Claims

1. An Extensible Markup Language (XML) method, comprising:
receiving, by an XML Document Management Server (XDMS), an XML document management operation request sent from an XML Document Management Client (XDMC), the request carrying a document identifier and state information;
modifying, by the XDMS, the state of the document corresponding to the document identifier to the state corresponding to the state information.

2. The method according to claim 1, wherein the state information is in a suspended state if the XML document management operation request is a suspension operation request;
the state information is in an active state if the XML document management operation request is a resumption operation request.

3. The method according to claim 1, wherein the XML document management operation request is implemented via an XML configuration access protocol message.

4. The method according to claim 1, wherein, the document identifier carried in the XML document management operation request is set in the Request-URI parameter in the XML configuration access protocol message, and the state information carried in the XML document management operation request is set in the message body of the XML configuration access protocol message.

5. The method according to any of claims 1-4, wherein the state information corresponding to the state of the document is stored in the metadata of the document or a separate document.

6. The method according to claim 1, wherein before the process of receiving, by an XDMS, an XML document management operation request sent from an XDMC, the method comprises:
obtaining, by the XDMC, the state of the document corresponding to the document identifier, the obtained state of the document being not consistent with the state required by the XDMC.

7. An XML document management system, comprising an XML Document Management Client (XDMC) and an XML Document Management Server (XDMS);
the XDMC is adapted to send an XML document management operation request to the XDMS, with a document identifier and state information carried in the request;
the XDMS is adapted to modify the state of the document corresponding to the document identifier to the state corresponding to the state information.

8. The system according to claim 7, wherein the XDMC comprises a message constructing unit and a message transmitting unit;
the message constructing unit is adapted to construct the XML document management operation request carrying the document identifier and the state information;
the message transmitting unit is adapted to send the XML document management operation request to the XDMS.

9. The system according to claim 7, wherein the XDMS comprises a receiving unit and a processing unit;
the receiving unit is adapted to receive the XML document management operation request carrying the document identifier and the state information from the XDMC;
the processing unit is adapted to receive the XML document management operation request from the receiving unit, and modify the state of the document corresponding to the document identifier to the state corresponding to the state information.

10. The system according to claim 9, wherein the XDMS comprises an obtaining unit and a determining unit;
the obtaining unit is adapted to obtain the current state information of the document corresponding to the document identifier, carried in the XML document management operation request, and transmit the current state information to the determining unit;
the determining unit is adapted to determine whether the current state information is consistent with the state information carried in the XML document management operation request, and send an initiation instruction to the processing unit if the current state information is not consistent with the state information carried in the XML document management operation request.

11. An XML Document Management Client (XDMC), comprising a message constructing unit and a message transmitting unit;
the message constructing unit is adapted to construct an XML document management operation request, with a document identifier and state information carried in the request;
the message transmitting unit is adapted to send the XML document management operation request to the XDMS.

12. An XML Document Management Server (XDMS), comprising a receiving unit and a processing unit;
the receiving unit is adapted to receive an XML document management operation request from an XDMC, the XML document management operation request carrying an document identifier and state information;
the processing unit is adapted to receive the XML document management operation request from the receiving unit, and modify the state of the document corresponding to the document identifier to the state corresponding to the state information.

13. The XDMS according to claim 12, wherein the XDMS comprises an obtaining unit and a determining unit;
the obtaining unit is adapted to obtain the current state information of the document corresponding to the document identifier, carried in the XML document management operation request, and transmit the current state information to the determining unit;
the determining unit is adapted to determine whether the current state information is consistent with the state information carried in the XML document management operation request, and send an initiation instruction to the processing unit if the current state information is not consistent with the state information carried in the XML document management operation request.
